# EUROPEAN PATENT APPLICATION

(11) **EP 4 752 607 A1**
(43) Date of publication of application: **03.06.2026**
(21) Application number: 25214687.3
(22) Date of filing: 10.11.2025
(51) Int. Cl.: G02B 5/30, G02B 27/01, G02B 27/28

(54) **OPTICAL SYSTEM AND NEAR-EYE DISPLAY APPARATUS**

(30) Priority: 27.11.2024 CN 202411718704
(71) Applicant: Beijing Zitiao Network Technology Co., Ltd., Beijing 100190 (CN); Lemon Inc., Grand Cayman, KY1-1205 (KY)
(72) Inventor: ZHU, Shaopeng, Beijing, 100028 (CN); ZHANG, Ziyang, Los Angeles, 90066 (US); ZHANG, Zhao, Beijing, 100028 (CN); LI, Xin, Beijing, 100028 (CN); TIAN, Yao, Beijing, 100028 (CN); LI, Xiaokai, Beijing, 100028 (CN)
(74) Representative: Marks & Clerk LLP

(57) **Abstract**

An optical system and a near-eye display apparatus are provided. The optical system includes: a lens structure; and a beam splitting film, a reflective polarizing film and a phase retardation film disposed on the lens structure, the reflective polarizing film and the phase retardation film being located at a same side of the beam splitting film, image light transmitted through the beam splitting film being configured to be reflected between the beam splitting film and the reflective polarizing film and exit from the reflective polarizing film, and the lens structure including at least one lens. The optical system further includes a light filtering structure located at a side of the reflective polarizing film that is away from the beam splitting film, the light filtering structure is configured such that, among light rays incident from the side away from the reflective polarizing film, an average transmittance of light rays having an incidence angle greater than 50 degrees is a first transmittance, an average transmittance of light rays having an incidence angle less than 30 degrees is a second transmittance, and a ratio of the first transmittance to the second transmittance is less than 1/3. By arranging the light filtering structure having different transmittances for light rays with different incidence angles, it's conductive to reduce the interference of ambient light.

## Description

### TECHNICAL FIELD

Embodiments of the present disclosure relate to an optical system and a near-eye display apparatus.

### BACKGROUND

When a near-eye display apparatus is worn in front of user's eyes, image light emitted by the display apparatus can be directed towards the human eyes after propagating through an optical system. The optical system may include at least one of an aspherical lens, a Fresnel lens, a folded optical path (Pancake) lens, and at least one of a co-axis lightguide (Birdbath), a geometric waveguide, and a diffractive waveguide. Among these structures in the optical system, certain components exhibit strong reflection toward external stray light. If the near-eye display apparatus is a non-enclosed wearable near-eye display apparatus, the area around the user's eyes is not fully shielded from ambient light. As a result, external interference light tends to pass through structures with high reflectivity in the optical system, forming stray light, light spots, or strong background light, etc., which then superimpose with the image light emitted by the displayer, thus interfering with the human eyes' viewing of the normal displayed image.

### SUMMARY

The present disclosure provides an optical system and a near-eye display apparatus.

An embodiment of the present disclosure provides an optical system, An optical system, including: a lens structure; and a beam splitting film, a reflective polarizing film and a phase retardation film disposed on the lens structure, the reflective polarizing film and the phase retardation film being located at a same side of the beam splitting film, image light transmitted through the beam splitting film being configured to be reflected between the beam splitting film and the reflective polarizing film and exit from the reflective polarizing film, and the lens structure including at least one lens; where the optical system further includes a light filtering structure located at a side of the reflective polarizing film that is away from the beam splitting film, the light filtering structure is configured such that, among light rays incident from a side of the light filtering structure that is away from the reflective polarizing film, an average transmittance of light rays having an incidence angle greater than 50 degrees is a first transmittance, an average transmittance of light rays having an incidence angle less than 30 degrees is a second transmittance, and a ratio of the first transmittance to the second transmittance is less than 1/3.

For example, according to an embodiment of the present disclosure, the light filtering structure includes a light-transmitting substrate and a plurality of light-absorbing portions disposed in the light-transmitting substrate; in an arrangement direction of at least two adjacent light-absorbing portions, a size of an interval between adjacent light-absorbing portions is greater than a size of a light-absorbing portion of the adjacent light-absorbing portions, and the light rays incident on the light filtering structure comprise at least a first part of light rays and a second part of light rays, the first part of light rays is absorbed by the plurality of light-absorbing portions and the second part of light rays exits from the interval.

For example, according to an embodiment of the present disclosure, the light-absorbing portion has a thickness of 20-200 micrometers, a size of the light-absorbing portion in the arrangement direction is no more than 50 micrometers, a size of the interval is in a range of 20 to 500 micrometers, and an included angle between a side surface and a bottom surface of the light-absorbing portion is in a range of 60 to 120 degrees.

For example, according to an embodiment of the present disclosure, the light filtering structure includes dichroic molecules, and an included angle between an absorption axis of a dichroic molecule and a light incident surface of the light filtering structure is in a range of 60 to 90 degrees.

For example, according to an embodiment of the present disclosure, the absorption axis of the dichroic molecule is perpendicular to a transmission direction of the reflective polarizing film.

For example, according to an embodiment of the present disclosure, the plurality of light-absorbing portions include a plurality of strip-shaped light-absorbing portions spaced apart from each other, and at least part of the plurality of strip-shaped light-absorbing portions are disposed in parallel to each other.

For example, according to an embodiment of the present disclosure, at least part of the plurality of light-absorbing portions are arranged in an array.

For example, according to an embodiment of the present disclosure, the plurality of light-absorbing portions include a plurality of strip-shaped light-absorbing portions, and the plurality of strip-shaped light-absorbing portions are disposed crosswise to form a grid shape.

For example, according to an embodiment of the present disclosure, the light filtering structure is located on a surface of the lens structure, a surface of an optical film, or inside the lens structure, and the optical film includes at least the reflective polarizing film.

For example, according to an embodiment of the present disclosure, the optical system further includes a linear polarizing film disposed on the lens structure, where the linear polarizing film is located at a side of the reflective polarizing film that is away from the beam splitting film.

For example, according to an embodiment of the present disclosure, the optical system further includes a linear polarizing film located at a side of the reflective polarizing film that is away from the beam splitting film, where the light filtering structure is located at a side of the linear polarizing film that is away from the reflective polarizing film.

For example, according to an embodiment of the present disclosure, the light filtering structure further includes liquid crystal molecules, and the absorption axis of the dichroic molecule is parallel to a direction of a major axis of a liquid crystal molecule.

For example, according to an embodiment of the present disclosure, the dichroic molecules include dichroic dye molecules or iodine molecules.

For example, according to an embodiment of the present disclosure, the dichroic dye molecules include at least one selected from the group consisted of bisazo dichroic dye molecules, trisazo dichroic dye molecules, anthraquinone dichroic dye molecules, triphenyldiazine and its derivatives as dichroic dye molecules, monomethine dichroic dye molecules, and polymethine dichroic dye molecules.

For example, according to an embodiment of the present disclosure, the light filtering structure has a thickness of 0.5-5 micrometers.

Another embodiment of the present disclosure provides a near-eye display apparatus, including any optical system above, where the near-eye display apparatus is a non-enclosed wearable near-eye display apparatus.

For example, according to an embodiment of the present disclosure, the near-eye display apparatus further includes: a display screen, disposed at a side of a beam splitting film that is away from a reflective polarizing film.

### BRIEF DESCRIPTION OF DRAWINGS

To more clearly illustrate the technical solutions of the embodiments of the present disclosure, the accompanying drawings of the embodiments will be briefly introduced below. Obviously, the drawings in the following description only relate to some embodiments of the present disclosure, and are not intended to limit the present disclosure.
Fig. 1 is a schematic diagram of an optical path of a near-eye display apparatus when viewed by a human eye;
Fig. 2 is a schematic diagram of an optical system provided according to an embodiment of the present disclosure;
Fig. 3 is a schematic diagram of an optical system provided according to one example of an embodiment of the present disclosure;
Fig. 4 is a schematic diagram of an optical system provided according to an embodiment of the present disclosure, when viewed by a human eye;
Fig. 5 is an enlarged view of a partial region A in an example of a light filtering structure shown in Fig. 4;
Fig. 6 is a schematic plan view of the light filtering structure shown in Fig. 5;
Fig. 7 is a curve of a transmittance of a light ray incident on the light filtering structure shown in Fig. 5 that varies with an incidence angle;
Figs. 8 and 9 are schematic diagrams of partial planar structures of light filtering structures provided according to different examples of an embodiment of the present disclosure;
Fig. 10 is an enlarged view of a partial region A in another example of the light filtering structure shown in Fig. 4;
Fig. 11 is a schematic diagram of alignment between a transmission direction of a linear polarizing film and an absorption axis of a light filtering structure; and
Fig. 12 is a schematic diagram of a near-eye display apparatus provided according to another embodiment of the present disclosure.

### DETAILED DESCRIPTION

In order to make objects, technical details and advantages of the embodiments of the invention apparent, technical solutions according to the embodiments of the present invention will be described clearly and completely as below in conjunction with the accompanying drawings of embodiments of the present invention. It is to be understood that the described embodiments are only a part of but not all of exemplary embodiments of the present invention. Based on the described embodiments of the present invention, various other embodiments can be obtained by those of ordinary skill in the art without creative labor and those embodiments shall fall into the protection scope of the present invention.

Unless otherwise defined, all the technical and scientific terms used herein have the same meanings as commonly understood by one of ordinary skill in the art to which the present invention belongs. The terms, such as "first," "second," or the like, which are used in the description and the claims of the present application, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects.

In the following embodiments of the present disclosure, when the quantity of a component is not specifically indicated, it means the component may be either singular or plural, or may be understood as "at least one". "At least one" refers to one or more, while "a plurality of" means at least two.

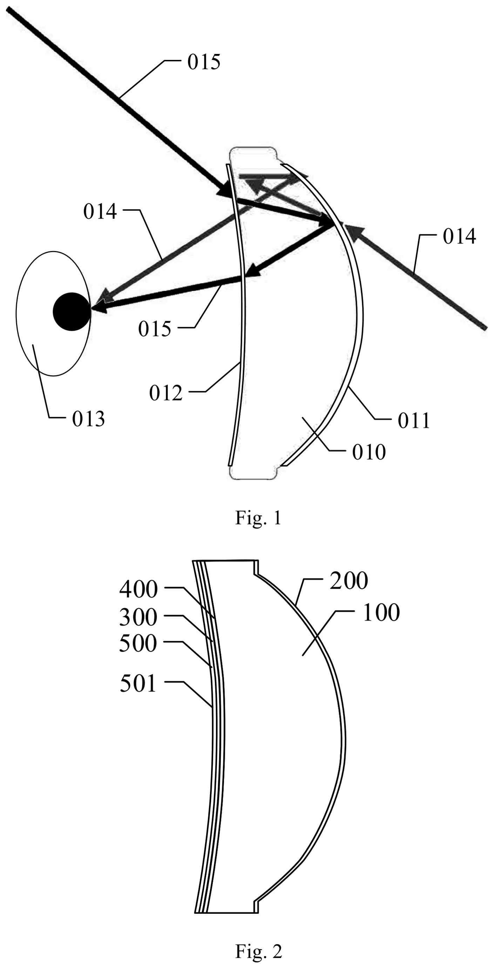

Fig. 1 is a schematic diagram of an optical path of a near-eye display apparatus when viewed by a human eye. As shown in Fig. 1, an optical system in the near-eye display apparatus may include a folded optical path system (Pancake) including a lens 010, and a beam splitting film 011, a reflective polarizing film 012, and a phase retardation film (not shown) disposed on the lens 010. The beam splitting film 011 is located at a side of the optical system that is close to a display screen (not shown), the reflective polarizing film 012 is located at a side of the optical system that is close to a human eye 013, and the phase retardation film may be located between the beam splitting film 011 and the reflective polarizing film 012, or may be located at a side of the reflective polarizing film 012 that is away from the beam splitting film 011. The reflectance of the beam splitting film 011 may be 50%. Image light 014 emitted by the display screen is transmitted through the beam splitting film 011 and then reflected between the beam splitting film 011 and the reflective polarizing film 012, and exits through the reflective polarizing film 012 towards the human eye 013. When the display apparatus is a non-enclosed wearable near-eye display apparatus, external interference light 015 such as surrounding natural light or reflected light from a human face will be incident into the optical system, and will be reflected by the beam splitting film 011 towards the human eye 013, or will be folded back between the beam splitting film 011 and the reflective polarizing film 012 and then directed towards the human eye, resulting in interference problems such as glare.

The inventors of the present disclosure have found, during the study, that a near-eye display optical system is very close to eyes, and the part of external natural light with a small incidence angle relative to the optical system (i.e., near-normal incidence) will be blocked by the eyes. Consequently, most of the external natural light that is actually reflected by the optical system and forms interference light enters the optical system at a large incidence angle relative to a surface of the optical system, for example, the incidence angle is greater than 40 degrees, or greater than 50 degrees. The image light that is emitted from the optical system and directed towards the human eye is distributed within a relatively small angular range, with its exit angle distribution being concentrated primarily at small angles, such as less than 40 degrees, or less than 30 degrees.

The present disclosure provides an optical system and a near-eye display apparatus. The optical structure includes a lens structure; and a beam splitting film, a reflective polarizing film and a phase retardation film disposed on the lens structure. The reflective polarizing film and the phase retardation film are located at a same side of the beam splitting film. Image light transmitted through the beam splitting film is configured to be reflected between the beam splitting film and the reflective polarizing film and exit from the reflective polarizing film. The lens structure includes at least one lens. The optical system further includes a light filtering structure located at a side of the reflective polarizing film that is away from the beam splitting film, and the light filtering structure is configured such that, among light rays incident from the outside, the average transmittance of light rays having an incidence angle greater than 50 degrees is a first transmittance, the average transmittance of light rays having an incidence angle less than 30 degrees is a second transmittance, and a ratio of the first transmittance to the second transmittance is less than 1/3.

According to the optical system of the present disclosure, the light filtering structure having different transmittances for light rays with different angles of incidence is disposed at the side of the reflective polarizing film that is away from the beam splitting film, which is conductive to ensure that the ambient light incident on the light filtering structure at a large angle has a lower transmittance, while the image light incident on the light filtering structure has a higher transmittance. In this way, it can effectively reduce the interference of ambient light without significantly affecting the display quality of the image light.

Hereinafter the optical system and the near-eye display apparatus provided in embodiments of the present disclosure will be described with reference to the accompanying drawings.

Fig. 2 is a schematic diagram of an optical system provided according to an embodiment of the present disclosure.

As shown in Fig. 2, the optical structure includes a lens structure 100; and a beam splitting film 200, a reflective polarizing film 300 and a phase retardation film 400 disposed on the lens structure 100. The reflective polarizing film 300 and the phase retardation film 400 are located at the same side of the beam splitting film 200, and the image light transmitted through the beam splitting film 200 is configured to be reflected between the beam splitting film 200 and the reflective polarizing film 300 and exit from the reflective polarizing film 300.

For example, as shown in Fig. 2, the beam splitting film 200 is configured to transmit a part of light rays and reflect the rest part of the light rays. For example, the beam splitting film 200 may include at least one film layer, for example, each film layer may have a thickness of 10-200 nanometers. For example, the beam splitting film 200 may have a transmittance of 50% and a reflectance of 50%. For example, the beam splitting film 200 may have a transmittance of 60% and a reflectance of 40%. For example, the beam splitting film 200 may have a transmittance of 65% and a reflectance of 35%. For example, the beam splitting film 200 may also be referred to as a transflective film. Embodiments of the present disclosure are not limited to this, and the transmittance and the reflectance of the beam splitting film 200 may be set according to product requirements.

For example, as shown in Fig. 2, the reflective polarizing film 300 is configured to reflect linearly polarized light of one characteristic and to transmit linearly polarized light of another characteristic.

For example, as shown in Fig. 2, the reflective polarizing film 300 functions as follows: there exists a transmission axis direction in the plane of the film layer, a transmittance of a polarized component (e.g., s-polarized light) of incident light parallel to the transmission axis direction is greater than a transmittance of a polarized component (e.g., p-polarized light) of the incident light perpendicular to the transmission axis direction, and a reflectance of the polarized component (e.g., s-polarized light) of the incident light parallel to the transmission axis direction is less than a reflectance of the polarized component (e.g., p-polarized light) of the incident light perpendicular to the transmission axis direction. For example, the reflective polarizing film 300 may also be referred to as a polarizing beam splitting film. For example, the transmittance of the polarized light parallel to the transmission axis direction of the reflective polarizing film 300 is not less than 85%, e.g., it's not less than 90%, or not less than 95%, or not less than 98%; and the reflectance of the polarized light perpendicular to the transmission axis direction of the reflective polarizing film 300 is not less than 85%, e.g., it's not less than 90%, or not less than 95%, or not less than 98%.

For example, as shown in Fig. 2, the phase retardation film 400 is configured to enable a conversion between a circularly polarized state and a linearly polarized state of the transmitted light. For example, the phase retardation film 400 may be a quarter-wave plate. For example, the material of the phase retardation film 400 may include liquid crystal polymers or polycarbonate. For example, the phase retardation film 400 has the following characteristics: within the plane of the film layer, there is a direction with a lowest refractive index and a direction with a highest refractive index, which are referred to as a fast axis and a slow axis, respectively. Polarized light parallel to the slow axis has a phase retardation of 1/4 wavelength after passing through the phase retardation film 400 as compared to polarized light parallel to the fast axis after passing through phase retardation film 400.

For example, as shown in Fig. 2, an included angle between the slow axis of the phase retardation film 400 and the transmission axis of the reflective polarizing film 300 is 45 degrees.

For example, as shown in Fig. 2, the beam splitting film 200 and the reflective polarizing film 300, serving as two reflective surfaces, provide an ultra-short-focus folded optical path (Pancake). For example, the arrangement of the beam splitting film 200 and the reflective polarizing film 300 achieves the folding of light rays, such that a focal length of the original optical system, which would have been increased due to additional twice reflections caused by the provision of the reflective polarizing film 300 and the beam splitter 200, is folded, thereby significantly reducing the space needed between the human eye and the optical system, and making the optical system smaller and thinner.

As shown in Fig. 2, the lens structure 100 includes at least one lens.

For example, Fig. 2 schematically shows that the lens structure 100 includes one lens, the beam splitting film 200 is located at one surface of the lens, and the phase retardation film 400 and the reflective polarizing film 300 are located at the other surface of the lens. However, the present disclosure is not limited to this. The lens structure 100 may include a plurality of lenses, and the beam splitting film 200 and the reflective polarizing film 300 may be located at different surfaces of the same lens or located at the surfaces of different lenses, and the embodiments of the present disclosure are not limited to this. For example, the beam splitting film 200 may be plated on the surface of the lens, and at least one of the phase retardation film 400 and the reflective polarizing film 300 may be bonded to the surface of the lens by means of an optical adhesive.

As shown in Fig. 2, the optical system further includes a light filtering structure 500 located at a side of the reflective polarizing film 300 that is away from the beam splitting film 200, the light filtering structure 500 is configured such that, among light rays incident from a side of the light filtering structure 500 away from the reflective polarizing film, the average transmittance of light rays having an incidence angle greater than 50 degrees is a first transmittance, the average transmittance of light rays having an incidence angle less than 30 degrees is a second transmittance, and a ratio of the first transmittance to the second transmittance is less than 1/3.

According to the optical system of the present disclosure, the light filtering structure having different transmittances for light rays with different angles of incidence is disposed at the side of the reflective polarizing film that is away from the beam splitting film, which is conductive to ensure that the ambient light incident on the light filtering structure at a larger angle has a lower transmittance (e.g., the light will basically not be incident on a structure constituting the Pancake optical path), while the image light incident on the light filtering structure has a higher transmittance. In this way, it can effectively reduce the interference of ambient light without significantly affecting the display quality of the image light.

The external incident light rays described above are the light rays incident from the air into the optical system. For example, when a light incident surface 501 of the light filtering structure 500 is in contact with the air, the light filtering structure 500 is configured such that, among the light rays incident from the air onto the light incident surface 501, the average transmittance of light rays having an incidence angle greater than 50 degrees is the above-mentioned first transmittance, and the average transmittance of light rays having an incidence angle less than 30 degrees is the above-mentioned second transmittance; here, the incidence angle refers to an included angle between the incident light ray and a normal line of the light incident surface of the light filtering structure. When there are other film layers disposed between the light filtering structure 500 and the air, the incidence angle of light rays that satisfies the aforementioned transmittance relationship is the incidence angle of the light rays incident on a surface of the other film layers that is in contact with the air. For the incidence angle of the light rays incident on the light incident surface 501 of the light filtering structure 500, the refractive index of the other film layers should be taken into account. The aforementioned incidence angle refers to an included angle between the incident light ray and the normal line of the light incident surface of the other film layers when the light ray is incident on the light incident surface of the other film layers.

For example, the light rays incident on the side of the light filtering structure that is away from the reflective polarizing film may be light rays incident from an external environment, where the "external environment" refers to an environment outside the optical system, and light rays incident from the external environment may include ambient light. Different light rays with an incidence angle greater than 50 degrees may have different transmittances or the same transmittance. The average transmittance of these light rays is referred to as the first transmittance. Different light rays with an incidence angle less than 30 degrees may have different transmittances or the same transmittance. The average transmittance of these light rays is referred to as the second transmittance.

For example, as shown in Fig. 2, the light filtering structure 500 may also be referred to as an angular filter film, which exhibits varying transmittance for light incident at different angles, thereby achieving selective filtering. For the light rays incident on the light incident surface of the light filtering structure 500, the first transmittance of the light rays with an incidence angle greater than 50 degrees may vary with the change in the incidence angle of the light rays. For example, as the incidence angle of the light rays increases, the first transmittance of the light filtering structure for those light rays decreases. For example, for the light rays incident on the light incident surface of the light filtering structure 500, the second transmittance of the light rays with an incidence angle less than 30 degrees may vary with the change in the incidence angle of the light rays, or it may not vary with the change in the incidence angle of the light rays. For example, the first transmittance may refer to the transmittance of external ambient light incident on the light filtering structure 500 at a larger angle, where a lower transmittance is preferable, such as a minimum of 0, thereby minimizing the part of the external natural light reflected into the human eye. The second transmittance may refer to the transmittance of image light incident on the light filtering structure 500, where a higher transmittance is preferable; for example, this transmittance may be greater than 50%, or greater than 60%, or greater than 70%, or greater than 80%, or greater than 90%. Thus, the loss of image light incident on the display screen caused by the provision of the light filtering structure 500 may be controlled within an acceptable range.

For example, as shown in Fig. 2, a ratio of the first transmittance to the second transmittance is less than 1/4, or less than 1/5, or less than 1/10, or less than 1/50, or less than 1/100. The embodiment of the present disclosure does not list all possible values for the ratio of the first transmittance to the second transmittance, and it may be any value less than 1/3, where a smaller value is preferable.

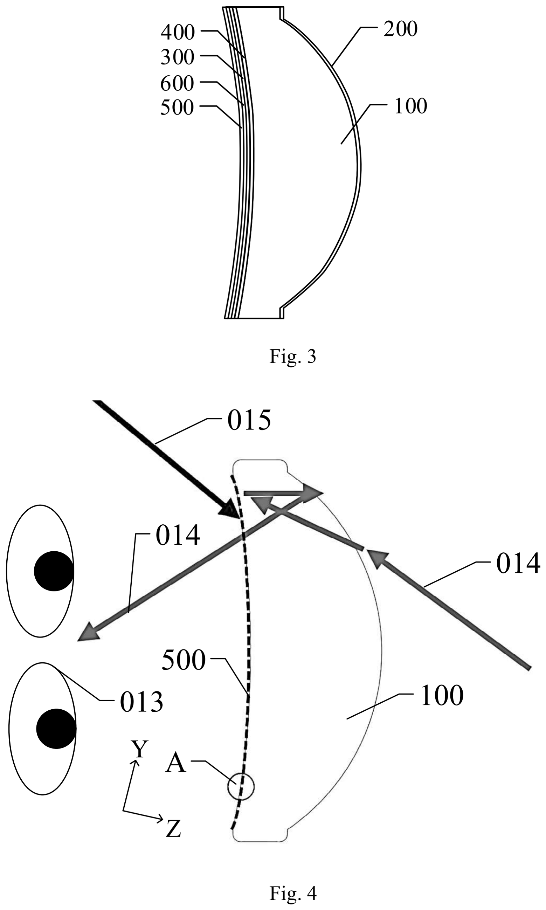

Fig. 3 is a schematic diagram of an optical system provided according to one example of an embodiment of the present disclosure.

In some examples, as shown in Fig. 3, the optical system further includes a linear polarizing film 600 located on the lens structure 100, and the linear polarizing film 600 is located at a side of a reflective polarizing film 300 that is away from a beam splitting film 200. The lens structure 100, the beam splitting film 200, the reflective polarizing film 300, and the phase retardation film 400 shown in Fig. 3 have the same features as the corresponding structures shown in Fig. 2 and are not described in detail here.

For example, as shown in Fig. 3, a transmission axis of the linear polarizing film 600 coincides with a transmission axis of the reflective polarizing film 300. The linear polarizing film 600 may be configured to further filter out other stray light, allowing only linearly polarized light (such as s-polarized light) to pass through the linear polarizing film 600 and enter the human eye.

In some examples, as shown in Figs. 2 and 3, the light filtering structure 500 is located on a surface of the lens structure 100, a surface of the optical film, or inside the lens structure 100, and the optical film includes at least the reflective polarizing film 300. For example, the optical film may further include the linear polarizing film 600. The light filtering structure 500 being located on the surface of the other structure may refer to the light filtering structure 500 being in direct contact with the surface of the other structure, e.g., it's coated on the surface of the other structure, or it may refer to the light filtering structure 500 being bonded to the surface of other structure by means of an adhesive layer.

Figs. 2 and 3 schematically show that the light filtering structure 500 is located on a surface of an optical film, for example, on the surface of the reflective polarizing film 300 or the surface of the linear polarizing film 600, without limiting the present disclosure thereto. The light filtering structure 500 may also be located on a surface of a lens included in the lens structure 100, where the surface of the lens is located at a side of the reflective polarizing film 300 that is away from the beam splitting film 200. The light filtering structure 500 is located inside the lens structure 100, which may refer to that the light filtering structure 500 is located inside the lens included in the lens structure 100. For example, the light filtering structure 500 is placed in a mold used to form the lens, and fluid material for forming the lens is poured into the mold to surround the light filtering structure 500, and then the fluid material is cured to form the lens described above. At this point, the lens encapsulates the light filtering structure 500, and the two may be referred to as an integrated structure. The lens is located at a side of the reflective polarizing film 300 that is away from the beam splitting film 200.

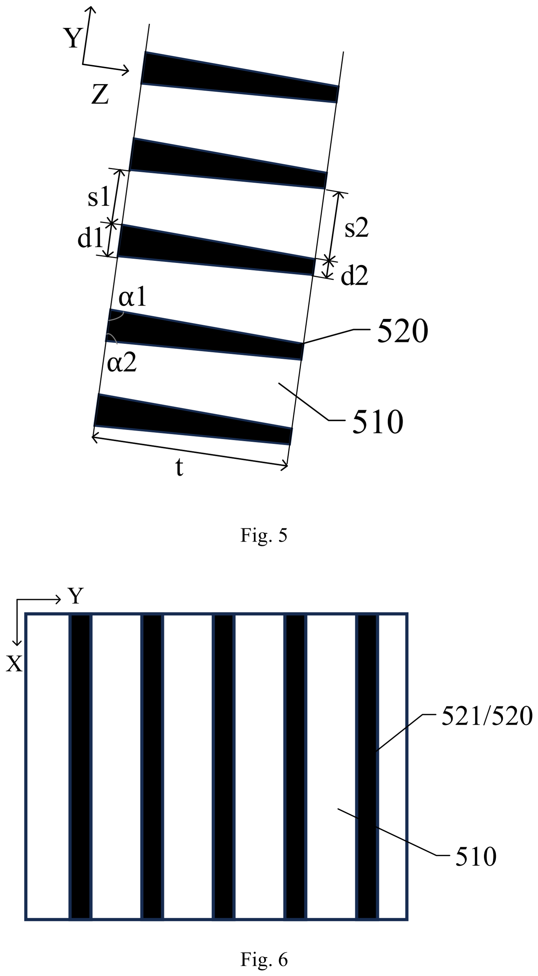

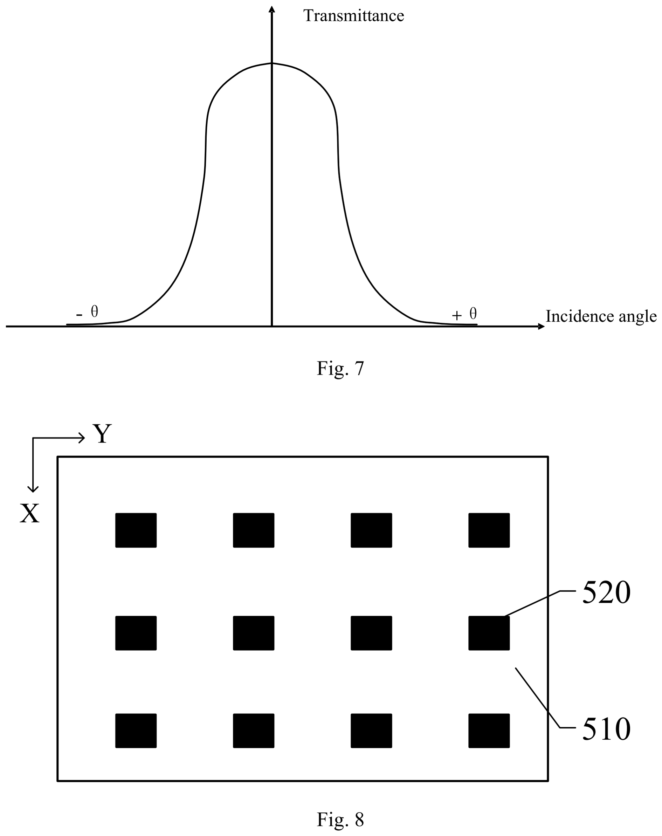

Fig. 4 is a schematic diagram of an optical system provided according to an embodiment of the present disclosure, when viewed by a human eye. Fig. 5 is an enlarged view of a partial region A in an example of a light filtering structure shown in Fig. 4. Fig. 6 is a schematic plan view of the light filtering structure shown in Fig. 5. Fig. 7 is a curve of a transmittance of a light ray incident on the light filtering structure shown in Fig. 5 that varies with an incidence angle. Fig. 4 schematically shows a top view of an optical system when viewed by a human eye. The optical system shown in Fig. 4 may be the optical system of either Fig. 2 or Fig. 3.

In some examples, as shown in Figs. 4 to 6, the light filtering structure 500 includes a light-transmitting substrate 510 and a plurality of light-absorbing portions 520 disposed in the light-transmitting substrate 510. In an arrangement direction of at least two adjacent light-absorbing portions 520, e.g., in the Y direction, a size of an interval between the adjacent light-absorbing portion 520, e.g., s1 and s2, is greater than a size of the light-absorbing portions 520, e.g., d1 and d2. Light rays incident on the light filtering structure 500 include at least a first part of light rays and a second part of light rays. The first part of light rays is absorbed by the light-absorbing portions, while the second part of light rays exits through the interval.

The light filtering structure of the present disclosure achieves absorption of light rays incident at large angles by arranging the light-absorbing portions capable of absorbing light and the light-transmitting intervals in the light-transmitting substrate.

For example, as shown in Figs. 4 to 7, among light rays incident on the light filtering structure 500 in the Y direction, light rays with an incidence angle greater than θ, e.g., at least part of ambient light 015, are substantially absorbed by the light filtering structure 500, and light rays with an incidence angle less than θ, e.g., image light 014, are transmitted through the light filtering structure 500. As the incidence angle gradually decreases, the transmittance of the light filtering structure 500 for the light rays gradually increases. For example, the aforementioned θ may be 40 degrees, or 50 degrees, or 60 degrees, or 70 degrees, or 80 degrees, etc.

For example, Fig. 4 schematically shows that the Y direction may be a direction along a surface of the light incident surface, without limiting the present disclosure thereto, it may also be parallel to a direction of a line connecting the two eyes.

For example, as shown in Fig. 5, the light-absorbing portions 520 may be made of a light-absorbing material, such as a black light-absorbing material. For example, the absorbance of the black light-absorbing material for visible light is greater than 80%, e.g., it's greater than 90%.

In some examples, as shown in Fig. 5, each light-absorbing portion 520 has a thickness of 20-200 micrometers, e.g., 20 µm ≤ t ≤ 200 µm; a size of the light-absorbing portion 520 in the arrangement direction is not greater than 50 micrometers, e.g., d1 and d2 satisfy: 0 µm ≤ d1 ≤ 50 µm, and 0 µm ≤ d2 ≤ 50 µm, but d1 and d2 cannot both be equal to 0; a size of the interval is 20-500 micrometers, e.g., s1 and s2 satisfy: 20 µm ≤ s1 ≤ 500 µm and 20 µm ≤ s2 ≤ 500 µm; and an included angle between a side surface and a bottom surface of the light-absorbing portion 520 is 60-120 degrees, e.g., α1 and α2 satisfy 60° ≤ α1 ≤ 120°, and 60° ≤ α2 ≤ 120°.

The light filtering structure provided in the present disclosure achieves a low transmittance for ambient light incident at a specific large angle by adjusting the size characteristics of the light-absorbing portions, e.g., it achieves higher light-filtering efficiency, while maintaining a higher transmittance for image light incident at a smaller angle.

For example, as shown in Fig. 5, the thickness of the light-absorbing portion 520 is 30-50 microns, e.g., 80-100 microns, 40-150 microns, and 60-180 microns. The specific numerical values for the thickness of the light-absorbing portion 520 in the embodiment of the present disclosure will not be exhaustively listed here. The thickness of the light-absorbing portion 520 may be any value from 20 microns to 200 microns. For example, the light filtering structure 500 may be a structure with a uniform thickness.

For example, as shown in Fig. 5, the light-absorbing portions 520 may include strip-shaped light-absorbing portions 521, where the width of each strip-shaped light-absorbing portion 521 is not greater than 50 micrometers. For example, the width of the strip-shaped light-absorbing portion 521 at two side ends facing towards the human eye and the display screen is not greater than 50 micrometers. For example, the maximum width of the strip-shaped light-absorbing portion 521 is not greater than 50 micrometers. For example, the width of the strip-shaped light-absorbing portion 521 is not greater than 40 micrometers, e.g., it's not greater than 30 micrometers, or not greater than 20 micrometers, etc. The specific numerical values for the width of the light-absorbing portion 520 in the embodiment of the present disclosure will not be exhaustively listed here.

For example, as shown in Fig. 5, the side surfaces of the light-absorbing portion 520 may be the surfaces of adjacent light-absorbing portions 520 facing towards each other, and the bottom surface of the light-absorbing portion 520 may be the surface of the light-absorbing portion 520 at a side facing towards the human eye and/or the displayer. For example, an included angle between the side surface and the bottom surface of the light-absorbing portion 520 may be 70-90 degrees, e.g., 80-100 degrees. The specific numerical values for the included angle between the side surface and the bottom surface of the light-absorbing portion 520 in the embodiment of the present disclosure will not be exhaustively listed here, and may be any value between 60 degrees and 120 degrees.

For example, as shown in Fig. 5, the cross-section of the strip-shaped light-absorbing portion 521 may be trapezoidal, rectangular, triangular, or in other shapes. For example, the width d1 of the end of the strip-shaped light-absorbing portion 521 close to the human eye may be set to be greater than the width d2 of the end of the strip-shaped light-absorbing portion 521 away from the human eye, thereby minimizing the amount of light rays incident from the human eye onto the lens structure 100.

For example, as shown in Fig. 5, the size of the light-absorbing portion 520 in a thickness direction thereof may be the same as the size of the light-transmitting substrate 510 in a thickness direction thereof, but the present disclosure is not limited to this. The thickness of the light-absorbing portion 520 may be less than the thickness of the light-transmitting substrate 510 such that the light-absorbing portion 520 is completely embedded within the light-transmitting substrate 510.

In some examples, as shown in Figs. 5 and 6, the plurality of light-absorbing portions 520 include a plurality of strip-shaped light-absorbing portions 521 spaced apart from each other, and at least part of the strip-shaped light-absorbing portions 521 are disposed in parallel to each other. With the strip-shaped light-absorbing portions 521, absorption of ambient light at a large angle in a specific direction can be achieved.

For example, as shown in Figs. 4 to 6, the plurality of strip-shaped light-absorbing portions 521 are arranged in the Y direction. For example, the plurality of strip-shaped light-absorbing portions 521 are arranged along a direction parallel to a line connecting the two eyes 013. When a user uses the system, the left-right hand direction may be referred to as a left-right direction, and the direction parallel to the line connecting the two eyes 013 may refer to a direction from left to right or from right to left. Thus, the light filtering structure may filter the ambient light with a large angle in the left-right direction of the user. Of course, the embodiments of the present disclosure are not limited to this. The plurality of strip-shaped light-absorbing portions 521 may also be arranged along a direction perpendicular to the line connecting the two eyes. For example, when the user uses the system, a direction pointing from the top of the user's head to the bottom of the user's feet may be referred to as a downward direction. In this case, the direction perpendicular to the line connecting the two eyes may refer to a direction pointing from top to bottom or from bottom to top. Thus, the light filtering structure may filter ambient light at a large angle in the up-down direction of the user. Of course, the embodiments of the present disclosure are not limited to this. The arrangement direction of the plurality of strip-shaped light-absorbing portions 521 may also be non-parallel to both the left-right direction and the up-down direction, such as an oblique direction, so as to meet certain viewing requirements. In Figs. 5 and 6, an X-direction is illustratively shown as an extension direction of the strip-shaped light-absorbing portions 521, a Y-direction is an arrangement direction of the strip-shaped light-absorbing portions 521, and a Z-direction is a thickness direction of the strip-shaped light-absorbing portions 521.

For example, as shown in Figs. 5 and 6, all the strip-shaped light-absorbing portions 521 may be arranged in parallel, e.g., arranged at equal intervals.

The embodiments of the present disclosure are not limited to this. For example, the shape of an orthographic projection of the strip-shaped light-absorbing portion on an XY plane is not limited to a straight line, it may be a curved strip, a broken line, etc.

For example, as shown in Figs. 4 and 5, a centerline of the strip-shaped light-absorbing portion 521 that extends in the thickness direction thereof may be perpendicular to the surface of the lens structure 100, or may be set to have a certain angle with relative to the surface of the lens structure 100, such as an angle greater than 60 degrees and less than 90 degrees, so as to absorb ambient light incident at a certain angle.

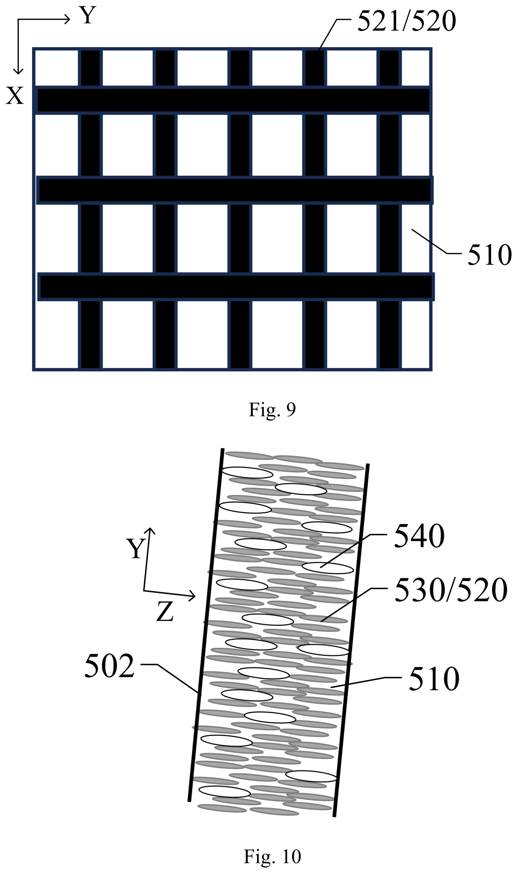

Figs. 8 and 9 are schematic diagrams of partial planar structures of light filtering structures according to different examples of an embodiment of the present disclosure.

In some examples, as shown in Fig. 8, at least part of the plurality of light-absorbing portions 520 are arranged in an array. For example, the plurality of light-absorbing portions 520 may be arranged in an array along a first direction and a second direction, where the first direction and the second direction may be the direction perpendicular to the line connecting the two eyes and the direction parallel to the line connecting the two eyes, respectively; and the direction perpendicular to the line connecting the two eyes is perpendicular to an optical axis of the lens structure 100. For example, the first direction may be an up-down direction, and the second direction may be a left-right direction. The plurality of light-absorbing portions 520 may absorb ambient light incident in the left- right direction and the up-down direction at large angle. The plurality of light-absorbing portions 520 arranged in an array may not only filter out the ambient light incident in the left-right direction and the up-down direction at large angle, but also filter out the ambient light incident in other directions at large angle. Of course, the embodiments of the present disclosure are not limited to this. An included angle between the first direction and the direction of the line connecting the two eyes, and an included angle between the second direction and the direction of the line connecting the two eyes may also be other angles ranging from 0 and 90 degrees.

Fig. 8 schematically shows that the shape of the orthographic projection of the light-absorbing portions arranged in an array on the XY plane is a quadrilateral, such as a rectangle or square, but the present disclosure is not limited to this. The shape of the orthographic projection of the light-absorbing portion may be a regular shape, such as a triangle, a pentagon, a hexagon, an octagon or other polygons, or a circular circle, an ellipse, etc., or an irregular shape.

In some examples, as shown in Fig. 9, the plurality of light-absorbing portions 520 include a plurality of strip-shaped light-absorbing portions 521, the plurality of strip-shaped light-absorbing portions 521 are disposed crosswise to form a grid shape. For example, the plurality of light-absorbing portions 520 include first strip-shaped light-absorbing portions extending along the first direction and second strip-shaped light-absorbing portions extending in the second direction. The first direction and the second direction may be the direction perpendicular to the line connecting the two eyes and the direction parallel to the line connecting the two eyes, respectively; and the direction perpendicular to the line connecting the two eyes is perpendicular to the optical axis of the lens structure 100. For example, the first direction may be an up-down direction, and the second direction may be a left-right direction. The plurality of light-absorbing portions 520 may absorb ambient light incident in the left-right direction and the up-down direction at large angle. In addition to filtering out ambient light incident in the left-right direction and the up-down direction at large angle, the plurality of light-absorbing portions 520 may also filter out ambient light incident in other directions at large angle. Of course, the embodiments of the present disclosure are not limited to this. An included angle between the first direction and the direction of the line connecting the two eyes, and an included angle between the second direction and the direction of the line connecting the two eyes may also be other angles ranging from 0 and 90 degrees.

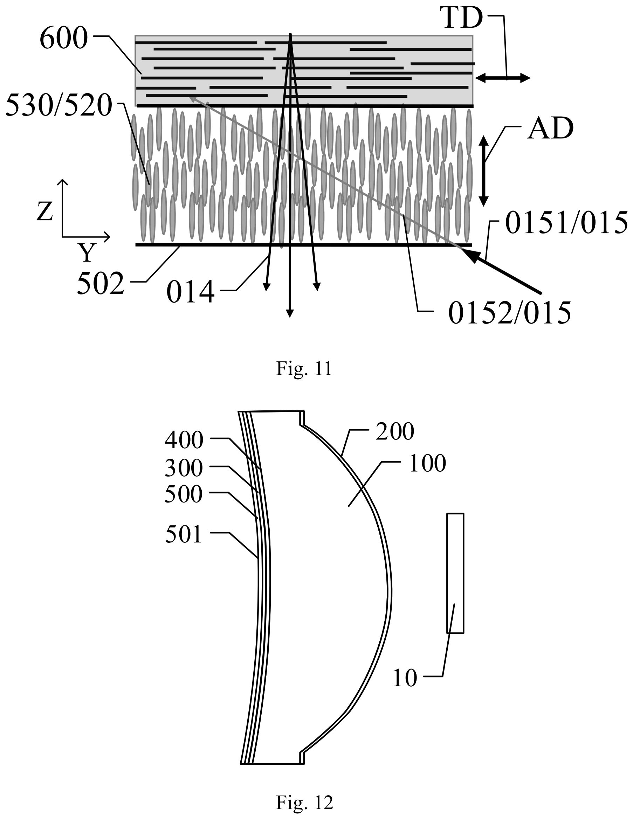

Fig. 10 is an enlarged view of a partial region A in another example of the light filtering structure shown in Fig. 4. Fig. 11 is a schematic diagram of alignment between a transmission direction of a linear polarizing film and an absorption axis of a light filtering structure.

In some examples, as shown in Figs. 10 and 11, the light filtering structure 500 includes dichroic molecules 530, and an included angle between an absorption axis AD of the dichroic molecules 530 and a light incident surface 502 of the light filtering structure 500 is 60-90 degrees. For example, the light incident surface of the light filtering structure 500 may have the same surface shape as the lens surface on which it is disposed, e.g., the absorption axis of the dichroic molecules 530 may form an included angle of 60-90 degrees with relative to the lens surface. For example, the absorption axis may correspond to an orientation where the dichroic molecules exhibit the highest absorbance for light rays.

Fig. 11 schematically shows that the absorption axis AD of the light filtering structure 500 is perpendicular to the light incident surface 502, but the present disclosure is not limited to this. The included angle between the absorption axis and the light incident surface may be other angles not less than 60 degrees and not greater than 90 degrees, such as 85 degrees, 80 degrees, 75 degrees, and 70 degrees. The specific angles between the absorption axis and the light incident surface in the embodiments of the present disclosure will not be exhaustively listed here. The angle may be any angle greater than or equal to 60 degrees and less than or equal to 90 degrees. When the included angle between the absorption axis and the light incident surface is less than 90 degrees, the absorption axis may include multiple directions that satisfy the above angle relationship.

In some examples, as shown in Figs. 4, 10, and 11, the absorption axis AD of the dichroic molecule 530 is perpendicular to a transmission direction, e.g., TD of the reflective polarizing film 300.

In some examples, as shown in Figs. 4, 10, and 11, the light filtering structure 500 is located at a side of the linear polarizing film 600 that is away from the reflective polarizing film 300, and the absorption axis AD of the dichroic molecule 530 is perpendicular to the transmission direction TD of the linear polarizing film 600.

For example, as shown in Figs. 10 and 11, light rays incident on the light incident surface of the light filtering structure 500 at small angle, such as the image light 014, have a larger included angle between its polarization direction and the absorption axis AD of the dichroic molecules 530; for instance, the polarization direction of part of light rays of the image light 014 forms a 90-degree angle with relative to the absorption axis AD, where the light rays incident at small angle may pass through the light filtering structure 500 after being incident on the light filtering structure 500 and then continue to propagate. The ambient light incident on the light incident surface of the light filtering structure 500 at large angle, such as the light ray 015, includes a polarized component 0151 having a smaller included angle between its polarization direction and the absorption axis AD, where part of light rays in the polarized component 0151 is absorbed by the light filtering structure 500, and the larger the incidence angle of the ambient light, the more of its polarized component is absorbed by the light filtering structure 500. Thus, by setting the absorption axis of the dichroic molecules, the absorbance for ambient light incident at large angle can be increased.

For example, as shown in Fig. 11, the ambient light incident on the light filtering structure 500 at large angle further includes a polarized component having a polarization direction perpendicular to a YZ plane, such as a polarized component 0152. The polarization direction of this polarized component is orthogonal to the transmission direction TD of the linear polarizing film 600, and this polarization direction is also orthogonal to the transmission direction of the reflective polarizing film 300. Therefore, this polarized component will not be incident into the pancake system. In addition, the polarization direction of the image light exiting from the linear polarizing film 600 is parallel to the transmission direction TD of the linear polarizing film 600, and the light filtering structure 500 has a small absorption for the image light, thereby minimizing the loss of the image light.

According to the optical system provided in this example, by limiting the included angle between the absorption axis of the dichroic molecules and the light incident surface of the light filtering structure, the polarized component of the external ambient light incident at large angle, in a direction parallel to the absorption axis of the dichroic molecules, is absorbed after passing through the light filtering structure, while the polarized component of the ambient light in another direction is absorbed by the linear polarizing film, so that the interference caused by ambient light incident at large angle can be effectively reduced.

For example, as shown in Figs. 4 and 10, the included angle between the dichroic molecules 530 at different positions and the light incident surface of the light filtering structure 500 may be the same or different. For instance, all the dichroic molecules may be tilted to the left or right, resulting in different absorbances for ambient light incident at a large angle from different directions, so as to be adaptable to various application scenarios.

In some examples, as shown in Fig. 10, the light filtering structure 500 further includes liquid crystal molecules 540, and the absorption axis of the dichroic molecules 530 is parallel to a direction of a major axis of the liquid crystal molecules 540.

In some examples, as shown in Fig.10, the dichroic molecules 530 include dichroic dye molecules or iodine molecules.

Fig. 10 only schematically shows characteristics such as the size and the density of the liquid crystal molecules 540 and the polarized light-absorbing molecules, but does not impose actual limitations on characteristics such as the size and the density of the liquid crystal molecules 540 and the dichroic molecules 530.

In some examples, as shown in Fig. 10, the dichroic dye molecules include at least one selected from the group consisted of bisazo dichroic dye molecules, trisazo dichroic dye molecules, anthraquinone dichroic dye molecules, triphenyldiazine and its derivatives as dichroic dye molecules, monomethine dichroic dye molecules, and polymethine dichroic dye molecules.

For example, the included angle between the absorption axis of the dichroic dye molecules and the light incident surface of the light filtering structure or the lens surface can be adjusted through the liquid crystal molecules. For example, when rodlike liquid crystal molecules are arranged perpendicular to the lens surface, the dichroic dye molecules are arranged along the liquid crystal molecules, so that the absorption axis of the dichroic dye molecules is perpendicular to the lens surface. The rodlike liquid crystal molecules may be reactive mesogens, characterized by that the rodlike molecules exhibiting liquid crystal properties have crosslinkable groups such as acrylic, epoxy, polyurethane and organosilicon groups.

For example, when the dichroic dye molecules are dissolved in the liquid crystal molecules, the dye molecules are arranged in the same direction as the liquid crystal molecules. In the absence of an external electric field, the liquid crystal molecules typically have a specific orientation, and the dye molecules also align their major axes parallel to a certain direction. In this case, when light is incident on the dye molecules, if the polarization direction of the light is parallel to the major axes of the dye molecules, the dye molecules strongly absorb the light; if the polarization direction of the light is perpendicular to the major axes of the dye molecules, the dye molecule absorbs very little light. When the arrangement direction of the liquid crystal molecules changes, the arrangement direction of the dichroic dye molecules changes accordingly. This can alter the light absorption of the dye molecules, thereby achieving greater absorption of ambient light incident at large angles and less absorption of image light incident at small angles, so as to solve the problem of glare interference.

For example, one or more types of reactive mesogens can be dissolved in an organic solvent such as methyl ethyl ketone (MEK), propylene glycol methyl ether acetate (PGMEA), xylene and toluene, to obtain a reactive mesogen solution, and the reactive mesogen solution is then uniformly distributed on a surface to be filmed. The process includes but is not limited to micro-gravure coating, blade coating, slit coating, inkjet printing, electrohydrodynamic printing, ultrasonic atomization spraying, spin coating, and curtain coating, etc. The light filtering structure may be directly coated onto the surface of the linear polarizing film, or coated elsewhere and then transferred to the surface of the linear polarizing film.

For example, the reactive mesogens in the solvent undergo a vertical alignment process after solution coating, where the length direction of the rodlike liquid crystal molecules is perpendicular to a tangential direction of the surface where they are formed. A vertical alignment method includes: surface treatment alignment, alignment layer alignment, photoalignment, and coating alignment. For example, the surface treatment alignment involves performing plasma surface treatment on the surface to be coated before coating liquid crystal molecules, so that its surface polarity and surface energy can support the subsequent preferential vertical alignment of rodlike liquid crystal molecules. For example, the alignment layer alignment includes, before coating liquid crystal molecules, first applying a layer of alignment layer on the surface to be coated by solution coating to provide surface conditions that support the preferential vertical alignment of rodlike liquid crystal molecules. The material of the alignment layer can include polyimide, fluorinated polyimide, and derivatives of the above categories, etc. For example, the photoalignment includes a method of first applying photopolymerizable organic substances by solution coating, and then irradiating with ultraviolet light to achieve vertical alignment. For example, the coating alignment includes forming a layer of inorganic dielectric coating first by means of vacuum evaporation, sputtering or chemical vapor deposition (CVD), etc. The material of the inorganic dielectric can include silicon oxide (SiOx), silicon nitride (SiNx), etc., and the inorganic dielectric coating guides the vertical alignment of the subsequent reactive mesogens.

In some examples, as shown in Figs. 10 and 11, the thickness of the light filtering structure 500 is 0.5-5 micrometers. For example, the light filtering structure 500 may be a structure with a uniform thickness.

For example, after the reactive mesogens are aligned in the coating solution, due to the presence of reactive groups, they may undergo crosslinking reactions under external energy excitation, thus forming a liquid crystal polymer layer with a thickness of 0.5-5 micrometers. The above reactive mesogens are mostly UV-crosslinking mesogens, so the coating solution may also contain UV light initiators.

By adjusting the thickness of the light filtering structure, it can achieve better absorption of ambient light incident at large angle.

For example, certain types of molecules in the above-described dye molecules may be bonded to the rodlike liquid crystal molecules through the reactive groups, thus forming molecules that are both alignable and dichroic.

In the light filtering structure provided according to the embodiments of the present disclosure, based on the selection and the setting of concentration, alignment angle, coating thickness, and other parameters of the dichroic dye molecules, an angular filter film having different transmittances for light incident at different angles can be formed.

Fig. 12 is a schematic diagram of a near-eye display apparatus provided according to another embodiment of the present disclosure.

As shown in Fig. 12, the near-eye display apparatus includes any of the above optical systems, and the near-eye display apparatus is a non-enclosed wearable near-eye display apparatus.

In some examples, as shown in Fig. 12, the near-eye display apparatus further includes a display screen 10 located at a side of the beam splitting film 200 that is away from the reflective polarizing film 300. For example, a display surface of the display screen 10 is located on a focal plane at a light incident side of the optical system.

For example, as shown in Fig. 12, the near-eye display apparatus may be a virtual reality (VR) display apparatus, an augmented reality (AR) display apparatus, or a mixed reality (MR) display apparatus, etc.

For example, the non-enclosed wearable near-eye display apparatus refers to an apparatus that retains a certain amount of open space around the lenses or other parts, so that the user's eyes will not be completely isolated from the external environment when wearing the apparatus. The non-enclosed wearable near-eye display apparatus has not only low weight and small volume but also high wearing comfort and aesthetic appeal.

For example, the near-eye display apparatus may be eyeglasses. For example, the non-enclosed wearable near-eye display apparatus may also be referred to as an open-type wearable near-eye display apparatus.

The present disclosure provides a non-enclosed wearable near-eye display apparatus provided with a light filtering structure, particularly a non-enclosed wearable near-eye display apparatus with a folded optical path system. The light filtering structure has different transmittances for light rays incident at different angles, which is conducive to reducing the transmittance of external interference light incident onto the light filtering structure at a large angle when the external interference light is constantly present, and ensures that such light is substantially not incident into the pancake optical system, thereby increasing the transmittance of image light incident on the light filtering structure. This minimizes the energy of the part of the external natural light reflected into the human eye, thus improving a signal-to-noise ratio of light incident into the human eye during use of the non-enclosed wearable near-eye display apparatus (i.e., image light/interference light), thereby addressing the problem of glare that tends to occur when a user wears the non-enclosed wearable near-eye display apparatus. The light filtering structure achieves an effect similar to privacy protection.

The following points need to be explained:
(1) In the accompanying drawings of the embodiments of the present disclosure, only the structures related to the embodiments of the present disclosure are involved, and other structures can refer to the usual designs.
(2) Features in the same embodiment and different embodiments of the present disclosure can be combined with each other without conflict.

The above are only exemplary implementations of the present disclosure, and are not intended to limit the scope of protection of the present disclosure. The scope of protection of the present disclosure is determined by the appended claims.

## Claims

1. An optical system, comprising:
a lens structure; and
a beam splitting film, a reflective polarizing film and a phase retardation film that are disposed on the lens structure, the reflective polarizing film and the phase retardation film being located at a same side of the beam splitting film, image light transmitted through the beam splitting film being configured to be reflected between the beam splitting film and the reflective polarizing film and exit from the reflective polarizing film, and the lens structure comprising at least one lens;
wherein the optical system further comprises a light filtering structure located at a side of the reflective polarizing film that is away from the beam splitting film, the light filtering structure is configured such that, among light rays incident from a side of the light filtering structure that is away from the reflective polarizing film, an average transmittance of light rays having an incidence angle greater than 50 degrees is a first transmittance, an average transmittance of light rays having an incidence angle less than 30 degrees is a second transmittance, and a ratio of the first transmittance to the second transmittance is less than 1/3.

2. The optical system according to claim 1, wherein the light filtering structure comprises a light-transmitting substrate and a plurality of light-absorbing portions disposed in the light-transmitting substrate,
in an arrangement direction of at least two adjacent light-absorbing portions, a size of an interval between adjacent light-absorbing portions is greater than a size of a light-absorbing portion of the adjacent light-absorbing portions, and
the light rays incident on the light filtering structure comprise at least a first part of light rays and a second part of light rays, the first part of light rays is absorbed by the plurality of light-absorbing portions and the second part of light rays exits from the interval.

3. The optical system according to claim 2, wherein the light-absorbing portion has a thickness of 20-200 micrometers, a size of the light-absorbing portion in the arrangement direction is no more than 50 micrometers, a size of the interval is in a range of 20 to 500 micrometers, and an included angle between a side surface and a bottom surface of the light-absorbing portion is in a range of 60 to 120 degrees.

4. The optical system according to claim 1, wherein the light filtering structure comprises dichroic molecules, and an included angle between an absorption axis of a dichroic molecule and a light incident surface of the light filtering structure is in a range of 60 to 90 degrees.

5. The optical system according to claim 4, wherein the absorption axis of the dichroic molecule is perpendicular to a transmission direction of the reflective polarizing film.

6. The optical system according to claim 2, wherein
the plurality of light-absorbing portions comprise a plurality of strip-shaped light-absorbing portions spaced apart from each other, and at least part of the plurality of strip-shaped light-absorbing portions are disposed in parallel to each other, or
at least part of the plurality of light-absorbing portions are arranged in an array, or
the plurality of light-absorbing portions comprise a plurality of strip-shaped light-absorbing portions, and the plurality of strip-shaped light-absorbing portions are disposed crosswise to form a grid shape.

7. The optical system according to any one of claims 2-3 and 6, wherein the light filtering structure is located on a surface of the lens structure, a surface of an optical film, or inside the lens structure, and the optical film comprises at least the reflective polarizing film.

8. The optical system according to any one of claims 2-3 and 6, further comprising a linear polarizing film disposed on the lens structure, wherein
the linear polarizing film is located at a side of the reflective polarizing film that is away from the beam splitting film.

9. The optical system according to claim 4, further comprising a linear polarizing film located at a side of the reflective polarizing film that is away from the beam splitting film, wherein
the light filtering structure is located at a side of the linear polarizing film that is away from the reflective polarizing film.

10. The optical system according to claim 4, wherein the light filtering structure further comprises liquid crystal molecules, and the absorption axis of the dichroic molecule is parallel to a direction of a major axis of a liquid crystal molecule.

11. The optical system according to claim 10, wherein the dichroic molecules comprise dichroic dye molecules or iodine molecules.

12. The optical system according to claim 11, wherein the dichroic dye molecules comprise at least one selected from the group consisted of bisazo dichroic dye molecules, trisazo dichroic dye molecules, anthraquinone dichroic dye molecules, triphenyldiazine and its derivatives as dichroic dye molecules, monomethine dichroic dye molecules, and polymethine dichroic dye molecules.

13. The optical system according to any one of claims 4-5 and 9-12, wherein the light filtering structure has a thickness of 0.5-5 micrometers.

14. A near-eye display apparatus, comprising the optical system according to any one of claims 1-13, wherein the near-eye display apparatus is a non-enclosed wearable near-eye display apparatus.

15. The near-eye display apparatus according to claim 14, further comprising:
a display screen, disposed at a side of the beam splitting film that is away from the reflective polarizing film.
